# EUROPEAN PATENT APPLICATION

(11) **EP 2 605 490 A1**
(43) Date of publication of application: **19.06.2013**
(21) Application number: 12195975.3
(22) Date of filing: 06.12.2012
(51) Int. Cl.: H04M 1/03, H04M 1/60, G06F 1/16, H04R 3/12, H04R 5/02

(54) **Terminal having a plurality of speakers and method of operating the same**

(30) Priority: 16.12.2011 KR 20110136272
(71) Applicant: Samsung Electronics Co., Ltd, Gyeonggi-do 443-742 (KR)
(72) Inventor: Choi, Jaejoon, 443-742 Gyeonggi-do (KR)
(74) Representative: Harrison Goddard Foote LLP

(57) **Abstract**

A terminal including a plurality of speakers and a method for operating the same are provided. The method includes generating a request for an audio data playback, processing a signal according to the audio data playback, determining an audio pass which will output the processed signal corresponding to the audio data, when the audio pass which will output the processed signal corresponding to the audio data is determined, dividing an audio signal to be transferred to sub amplifiers in a front terminal of at least one dual amplifier connected to a plurality of speakers in one-to-on correspondence and including two sub amplifiers corresponding to a dual amplifier, transferring the divided audio signal to a corresponding sub amplifier of the dual amplifier, and amplifying the processed signal corresponding to the audio data and transferring the amplified processed signal corresponding to the audio data to the speakers by the dual amplifier.

## Description

### BACKGROUND OF THE INVENTION

### 1. Field of the Invention:

The present invention relates to audio processing of a terminal. More particularly, the present invention relates to a terminal including a plurality of speakers capable of supporting an efficient and suitable output in a terminal having a plurality of speakers, and a method for operating the same.

### 2. Description of the Related Art:

Because a portable terminal supports a specific user function and the size thereof is small so that the user may carry the portable terminal, the popularity and use of the portable terminal has increased in many industrial and living fields. Further, in recent years, a portable terminal supporting various user functions has been introduced. For example, the portable terminal mounts an audio playback function and outputs various audio signals according to a request of the user. Such a portable terminal function has been developed to an improved type as needs and requiring conditions of the users are complicated. For example, in the portable terminal according to the related art, a plurality of speakers are disposed in one side of the portable terminal so as to support a stereo function. The stereo function is supported using the speakers. Here, an amplifier is arranged in the portable terminal according to the related art to support a suitable output of the speaker.

Meanwhile, the portable terminal according to the related art provides an output of a specific amplifier in which speakers receive divided outputs to amplify signals of the speakers. Such a limitation depends on a restriction of the number and the size of the amplifier. However, when a plurality of speakers are connected to one amplifier, the amplifier does not support a suitable output such that an output of the speaker cannot be normally operated. To prepare a plurality of amplifiers corresponding to respective speakers is not applicable to a portable terminal which must comply with a limited space. Further, because ports included in a controller or a CODEC of portable terminals is limited to the predetermined number, it is not easy to allocate ports for independently operating the respective speakers.

Therefore, a need exists for a suitable method and apparatus capable of improving an audio output function using a limited space and limited factors.

The above information is presented as background information only to assist with an understanding of the present disclosure. No determination has been made, and no assertion is made, as to whether any of the above might be applicable as prior art with regard to the present invention.

### SUMMARY OF THE INVENTION

Aspects of the present invention are to address at least the above-mentioned problems and/or disadvantages and to provide at least the advantages described below. Accordingly, an aspect of the present invention is to provide an apparatus and method for improving an audio output function using a limited space and limited factors.

The present invention has been made in view of the above problems, and provides a terminal including a plurality of speakers capable of supporting a suitable speaker output while maximizing a space use and supporting an adaptive stereo function according to convenience of a user, and a method of operating the same.

In accordance with an aspect of the present invention, a terminal having a plurality of speakers is provided. The terminal includes a speaker module including the plurality of speakers, a speaker support circuit including at least one dual amplifier having two sub amplifiers corresponding to a dual amplifier and amplifying an audio signal to be transferred to corresponding speakers of the plurality of speakers, signal lines connecting the speaker module to a CODEC, and at least one of a dividing circuit and a divider dividing an audio signal from the CODEC to the sub amplifiers of the dual amplifier, and the CODEC for separately providing audio data to be supplied to the at least one dual amplifier for a left speaker group and a right speaker group to the speaker support circuit as a differential signal, respectively.

In accordance with another aspect of the present invention, a method of operating a terminal having a plurality of speakers is provided. The method includes generating a request for an audio data playback, processing a signal according to the audio data playback, determining an audio pass which will output the processed signal corresponding to the audio data, when the audio pass which will output the processed signal corresponding to the audio data is determined, dividing an audio signal to be transferred to sub amplifiers in a front terminal of at least one dual amplifier connected to a plurality of speakers in one-to-on correspondence and including two sub amplifiers corresponding to a dual amplifier, transferring the divided audio signal to a corresponding sub amplifier of the dual amplifier; and amplifying the processed signal corresponding to the audio data and transferring the amplified processed signal corresponding to the audio data to the speakers by the dual amplifiers.

In accordance with another aspect of the present invention, a terminal for outputting an audio signal is provided. The terminal includes a plurality of speakers, at least one dual amplifier each of which comprises two sub amplifiers, a controller configured to determine which of the at least one dual amplifier corresponds to a left speaker group and which of a remaining of the at least one dual amplifier corresponds to a right speaker group based on an orientation of the terminal during operation, to operatively divide the audio signal according to which of the left speaker group and the right speaker group is to output the audio signal, and to operatively transfer corresponding divided portions of the audio signal to the left speaker group and the right speaker group based o the orientation of the terminal during operation.

Other aspects, advantages, and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other aspects, features, and advantages of certain exemplary embodiments of the present invention will be more apparent from the following description taken in conjunction with the accompanying drawings, in which:

FIG. 1 is a diagram schematically illustrating an outer appearance of a terminal according to an exemplary embodiment of the present invention;

FIG. 2 is a block diagram schematically illustrating a configuration of a terminal according to an exemplary embodiment of the present invention;

FIG. 3 is a diagram illustrating a configuration of a switch support circuit according to an exemplary embodiment of the present invention;

FIG. 4 is a flowchart illustrating a method of operating a terminal according to an exemplary embodiment of the present invention;

FIG. 5 is a diagram illustrating a configuration of a switch support circuit according to an exemplary embodiment of the present invention; and

FIG. 6 is a diagram illustrating an outer appearance of a terminal for describing an audio data output according to an exemplary embodiment of the present invention.

The same reference numerals are used to represent the same elements throughout the drawings.

### DETAILED DESCRIPTION OF EXEMPLARY EMBODIMENTS

The following description with reference to the accompanying drawings is provided to assist in a comprehensive understanding of exemplary embodiments of the invention as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope and spirit of the invention. In addition, descriptions of well-known functions and constructions may be omitted for clarity and conciseness.

The terms and words used in the following description and claims are not limited to the bibliographical meanings, but, are merely used by the inventor to enable a clear and consistent understanding of the invention. Accordingly, it should be apparent to those skilled in the art that the following description of exemplary embodiments of the present invention is provided for illustration purpose only and not for the purpose of limiting the invention as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

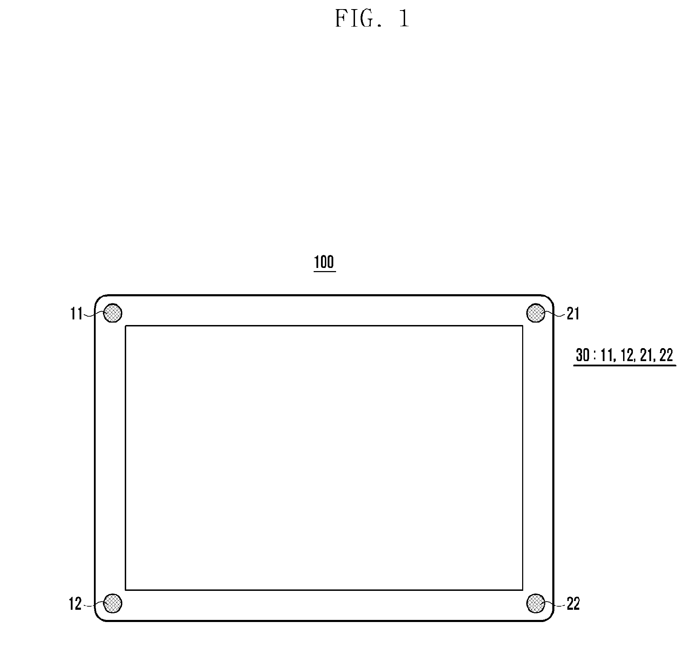

FIG. 1 is a diagram schematically illustrating an outer appearance of a terminal 100 according to an exemplary embodiment of the present invention.

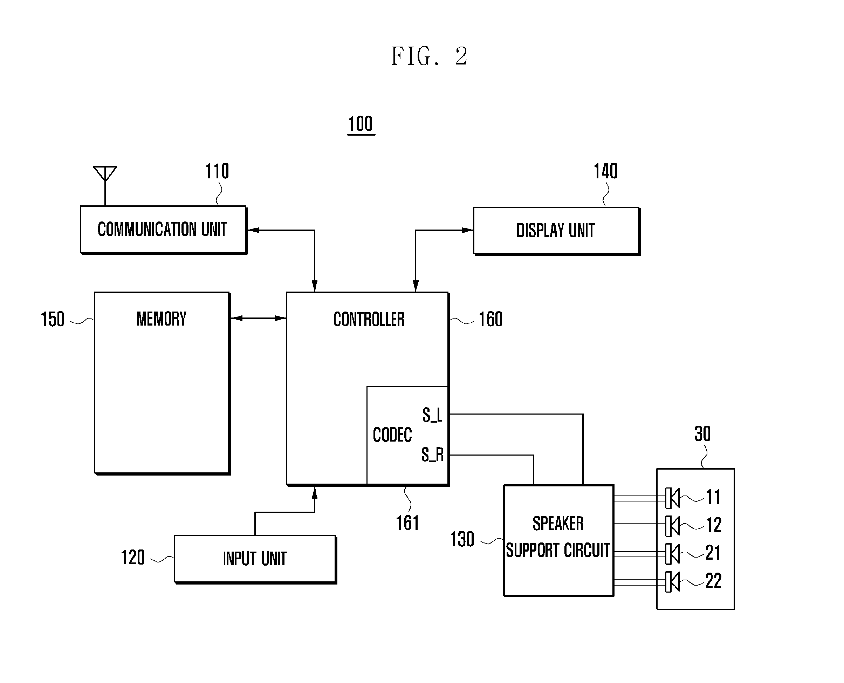

FIG. 2 is a block diagram schematically illustrating a configuration of a terminal 100 according to an exemplary embodiment of the present invention.

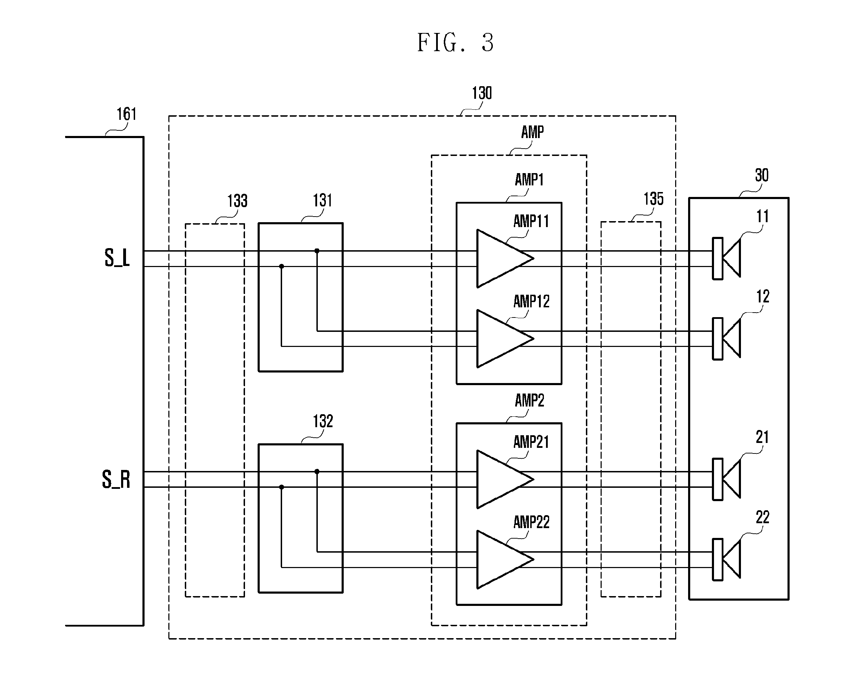

FIG. 3 is a diagram illustrating a configuration of a switch support circuit 130 according to an exemplary embodiment of the present invention.

Hereinafter, a terminal 100 according to exemplary embodiments of the present invention is described by way of a terminal having four speakers. However, exemplary embodiments of the present invention are not limited thereto. A dual amplifier and a signal division technology of a front terminal thereof according to exemplary embodiments of the present invention are applicable to a terminal having a greater or fewer number of speakers.

Referring to FIGs. 1 to 3, a terminal 100 according to an exemplary embodiment of the present invention may include a speaker module 30 having four speakers, a communication unit 110, an input unit 120, a speaker support circuit 130, a display unit 140, a memory 150, and a controller 160.

The terminal 100 having a construction as mentioned above include the speaker support circuit 130 and arranges a plurality of dual speakers for driving a speaker module 30 arranged in the terminal 100 to connect a speaker module 30 including a plurality of speakers to an amplifier in one-to-one correspondence. In this case, the terminal 100 may provide a signal supplied to the speaker module 30 as a reference differential input. An audio signal provided from the terminal 100 is a differential input signal supplied to respective amplifiers included in a dual amplifier, and each amplifier may amplify and provide a corresponding differential signal to speakers 11, 12, 21, and 22 connected in one-to-on correspondence according to a preset value. Accordingly, the terminal 100 may support a stable audio signal output such that an amplifier is allocated to respective speakers 11, 12, 21, 22 in a procedure of driving a plurality of amplifiers 11, 12, 21, and 22. In the terminal 100, a dual amplifier may be provided to drive a plurality of speakers 11, 12, 21, 22 to optimize a space for allocating an amplifier. Accordingly, the terminal 100 may support excellent space security.

When the terminal is manufactured in the form of a terminal supporting a communication function, the communication unit 110 may be added. Accordingly, when the terminal 100 does not support a communication function, a configuration of the terminal 100 may be omitted. Meanwhile, the communication unit 110 may be provided in the form of a mobile communication module to support a communication function of the terminal 100, particularly, a mobile communication function. The communication unit 110 forms a communication channel with a mobile communication system to support signal transceiving for performing a mobile communication function of the terminal 100. For example, the communication unit 110 may form at least one of a voice service channel, an image service channel, and a data service channel, and support transceiving of a specific signal according to a corresponding service channel.

According to exemplary embodiments of the present invention, the communication unit 110 may form a data communication channel with an external terminal or a web server and receive audio data from the external terminal or the web server. The communication unit 110 receives the audio data from the speaker support circuit 130 under control of the controller 160 and output the audio data through a speaker module 30. The terminal 100 provides an item for setting a function operated based on the speaker module 30 among various functions provided from the communication unit 110, and outputs receive audio data through the speaker module 30 according to corresponding selection setting or user selection.

According to exemplary embodiments of the present invention, the input unit 120 generates various input signals necessary for an operation of the terminal 100. The input unit 120 may be configured by various input devices such as a key board, a key pad, or a key button according to compatibility of the terminal 100. When the display unit 140 is provided in the form of a touch screen, the input unit 120 may be configured in the form of a touch map outputted on the touch screen. The input unit 120 may generate an input signal for setting such that the speaker module 30 is activated to output audio data, and an input signal for setting such that audio data outputted through the speaker module 30 is outputted through another audio pass, for example, earphone pass. The user may listen an output of audio data received from a call function or a communication function based on the communication unit 110 and audio data stored the memory 150 based on the speaker module 30 by generating a specific input signal to output audio data based the speaker module 30 using the input unit 120. According to exemplary embodiments of the present invention, the input unit 120 may include a volume up/down key. The user may perform volume control of the speaker module 30 using the volume up/down key. Substantially, a control signal of the volume up/down key may be operated as a command controlling gain control of dual amplifiers connected to speakers 11, 12, 21, and 23.

The speaker support circuit 130 is disposed between the controller 160 and the speaker module 30, and supports audio data output through the speaker module 30 among audio output functions of the terminal 100. To do this, the speaker support circuit 130 may include first signal lines 133 connected to a port associated with a speaker of various ports provided in a CODEC 161 of the controller 160, dividing circuits 131 and 132, a dual amplifier module, and second signal lines for transferring an output of the dual amplifier module to the speaker module 30.

The first signal lines 133 connect a first dual amplifier AMP1 of the dual amplifier module AMP to an S_L port of the CODEC 161. The first signal lines 133 connects a second dual amplifier AMP2 of the dual amplifier module AMP to the S_R port of the CODEC 161. When the speaker module 30 is supported to be operated based on a differential signal, the first signal lines 133 may be configured by a signal line pair for transferring a differential signal as illustrated above.

Dividing circuits 131 and 132 may include a first dividing circuit 131 disposed between an S_L port of the first signal lines 133 and the first dual amplifier AMP1, and a second dividing circuit 132 disposed between the S_R port of the first signal lines 133 and the second dual amplifier AMP2. The dividing circuits 131 and 132 divide a signal outputted from the CODEC 161 into two signal lines to transfer an audio signal to sub amplifiers AMP11, AMP12, AMP21, and AMP22 included in each dual amplifier module AMP. For example, the first dividing circuit 131 equally supplies a differential signal outputted from the S_L port to a sub amplifier AMP11 and a sub amplifier AMP12 included in the first dual amplifier AMP1. The second dividing circuit 132 equally supplies the differential signal outputted from the S_R port to a amplifier AMP21 and a sub amplifier AMP22 included in the second dual amplifier AMP2.

The dual amplifier module AMP amplifies and supplies the differential signal supplied to the speaker module 30 according to a preset scheme. The dual amplifier module AMP may include a first dual amplifier AMP1 for amplifying a differential signal outputted from the S_L port and a second dual amplifier AMP2 for amplifying a differential signal outputted from the S_R port. Here, the first dual amplifier AMP1 is connected to the first dividing circuit 131 and may include the sub amplifier AMP11 receiving a signal divided from the first dividing circuit 131 and the sub amplifier AMP12 configuring one set. The sub amplifier AMP11 is connected to an amplifier 11 included in a left speaker group comprising speakers 11 and 12 of the speaker module 30. The sub amplifier AMP12 is connected to an amplifier 12 included in a left speaker group comprising speakers 11 and 12 of the speaker module 30. The second dual amplifier AMP2 is connected to the second dividing circuit 132 and may include the amplifier AMP21 receiving a signal divided from the second dividing circuit 132 and the sub amplifier AMP12 configuring one set. The sub amplifier AMP21 is connected to a speaker 21 included in a right speaker group comprising speakers 21 and 22 of the speaker module 30. The sub amplifier AMP22 is connected to a speaker 22 included in a right speaker group comprising speakers 21 and 22 of the speaker module 30. For example, in sub amplifiers according to exemplary embodiments of the present invention, two sub amplifiers configure one set and an audio signal to be transferred to the four speakers is amplified and provided.

The second signal lines 135 are disposed between the sub amplifiers AMP11, AMP12, AMP21, AMP22 and the speaker module 30, and signals supplied from the sub amplifiers AMP11, AMP12, AMP21, AMP22 are supplied to a corresponding speaker. Particularly, the second signal lines 135 may be configured by respective signal line pairs to supply a differential signal provided from the sub amplifiers AMP11, AMP12, AMP21, and AMP22 to each speaker module 30.

The speaker module 30 may be division-disposed in a predetermined region. For example, when the terminal has a square shape, four speaker modules 30 may be disposed in respective corner regions of the terminal 100 having the square shape. In this case, four speakers 11, 12, 21, and 22 may be divided into a left speaker group comprising speakers 11 and 12, and a right speaker group comprising speakers 21 and 22. The left speaker group comprising speakers 11 and 12 is connected to an "S_L" port of CODEC 161 ports of the controller 160, receives audio data to be transferred to left speakers among audio data to be outputted, and outputs the received audio data. In the same manner, the right speaker group comprising speakers 21 and 22 is connected to an "S_R" port of CODEC 161 ports of the controller 160, receives audio data to be transferred to right speakers among audio data to be outputted, and outputs the received audio data. When the terminal 100 is arranged in a predetermined direction, the left speaker group comprising speakers 11 and 12 may be configured by left speakers 11 and 12 which are biased in a left side from a center of a screen. When the terminal 100 is arranged in a predetermined direction, the right speaker group comprising speakers 21 and 22 may be configured by right speakers 21 and 22 which are biased in a right side from a center of a screen. The left speaker group comprising speakers 11 and 12 may be connected to a pass including an S_L port being a left speaker support port of CODEC 161 ports of the controller 160 through the speaker support circuit 130. The right speaker group comprising speakers 21 and 22 may be connected to a pass including an S_R port being a right speaker support port of ports of the controller 160 through the speaker support circuit 130.

The display unit 140 provides various screen interfaces necessary for operating the terminal 100. For example, the display unit 140 supports an idle screen and a menu screen necessary for operating the terminal 100. Particularly, the display unit 140 according to exemplary embodiments of the present invention supports a screen supporting an audio data output. If the user activates a user function associated with playback of specific audio data, the display unit 140 outputs a screen associated with playback of corresponding audio data and various information for controlling playback of the audio data may be also outputted. For example, according to exemplary embodiments of the present invention, when the terminal 100 includes four speakers 11, 12, 21, and 22, the display unit 140 may display information about a normal operation state of respective speakers 11, 12, 21, and 22, information of speakers set as a left speaker group comprising speakers 11 and 12 among the speakers 11, 12, 21, and 22. For example, when the user sets the terminal 100 such that audio data are output based on a stereo function of a speaker in a state that the terminal 100 is arranged in the predetermined form, the display unit 140 may output information of a speaker module 30 set as the left speaker group comprising speakers 11 and 12 and the right speaker group comprising speakers 21 and 22. Output information of the speaker module 30 may be omitted according to user setting.

Meanwhile, the display unit 140 may output a control map necessary for controlling playback of audio data. To do this, the display unit 140 may support a touch screen function. When the display unit 140 supports a touch screen function, the display unit 140 is configured in the form in which a display panel and a touch panel overlap with each other. The display panel may output images corresponding to the foregoing control map. The touch panel may set a touch valid region and a touch invalid region on the display panel for operating an output control map, and transfer a touch event occurring in the touch valid region to the controller 160.

The memory 150 may store various base operating systems, application programs, and algorithms necessary for operating the terminal 100. Particularly, the memory 150 may store audio data to be output through a speaker module 30 and a program for playing corresponding audio data according to user request.

The controller 160 controls playback of audio data based on fourth speakers 11, 12, 21, and 22 according to the exemplary embodiment of the present invention. For example, the controller 160 generates an input signal for playing specific audio data from an input unit 120 or a display unit 140 of an input function. When playback of corresponding audio data is requested to be outputted through the speaker module 30, the controller 160 controls the terminal 100 such that the speaker module 30 is included in audio output pass. To do this, the controller 160 may include the CODEC 161.

When a request signal for playing specific audio data is generated, the CODEC 161 performs data processing for playing corresponding audio data. The CODEC 161 supports such that audio data played according to setting are output through specific audio pass. For instance, when audio data are set to be outputted through an earphone, the CODEC 161 may support such that corresponding audio data are output through the earphone. In this case, when the audio data is prepared to provide a stereo function, the CODEC 161 may separately output audio data to a left earphone and a right earphone of the earphone.

According to exemplary embodiments of the present invention, when the terminal 100 is set such that audio data are output through the speaker module 30, the CODEC 161 may support such that corresponding audio data are outputted through the speaker module 30. To do this, as described above, the CODEC 161 may include a port for outputting audio data, namely, an S_L port and an S_R port. The CODEC 161 separates a signal to be outputted to the left speaker group comprising speakers 11 and 12 and a signal to be outputted to the right speaker group comprising speakers 21 and 22 among audio data, and outputs the separate audio data through a corresponding port. The audio data outputted through the S_L port and the S_R port of the CODEC 161 may be transferred to specific speakers 11, 12, 21, and 22 through the speaker support circuit 130.

Meanwhile, although the foregoing exemplary embodiment of the present invention has illustrated base on a configuration in which a terminal has four speakers, the present invention is not limited thereto. For example, a terminal may have a greater or fewer number of speakers. Accordingly, the dual amplifier may be provided in the form of sub amplifiers connected to each speaker in one-to-one correspondence. For example, a terminal according to exemplary embodiments of the present invention having six speakers may include three dual amplifiers where two sub amplifiers configures one set or two dual amplifiers where three sub amplifiers configure one set. The terminal according to exemplary embodiments of the present invention having two speakers may have one dual amplifier where two sub amplifiers configure one set.

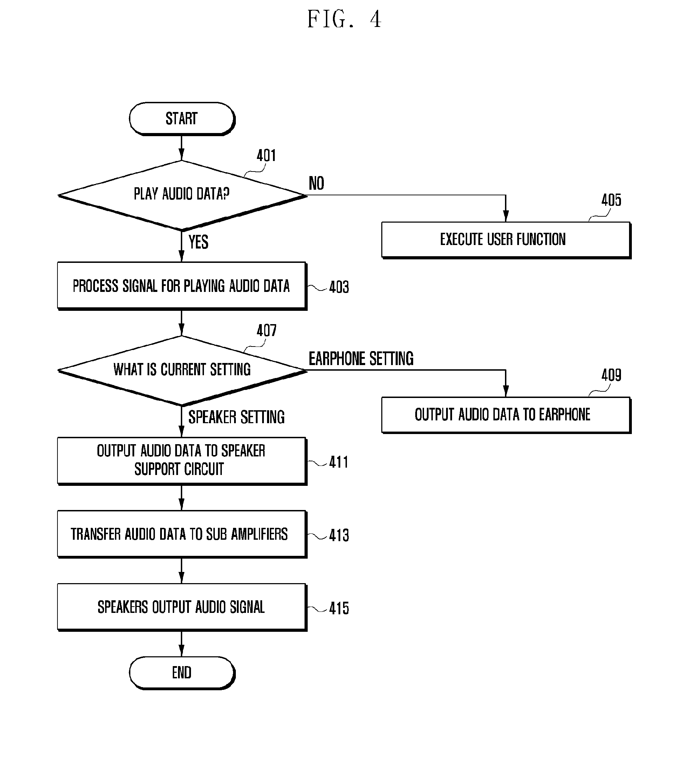

FIG. 4 is a flowchart illustrating a method of operating a terminal according to an exemplary embodiment of the present invention.

Referring to FIG. 4, in the method of operating the terminal, when an input signal for playing audio data is generated, the controller 160 may call playback-requested audio data according to a corresponding input signal, and load an application program for playing the audio data. The terminal determines whether an input signal for playing audio data is generated in step 401. For instance, if the terminal determines that an input signal for playing audio data is generated, then the controller 160 may call a CODEC 161 for playing the audio data. Then, the CODEC 161 may perform signal processing for playing selected audio data in step 403. Meanwhile, the CODEC 161 may perform data processing and confirm played audio data output setting. In contrast, when the generated input signal is not a signal for playing audio data, the controller 160 may support execution of a user function according to a corresponding input signal in step 405.

When the signal processing for playing the audio data is completed, the CODEC 161 determines the current setting in step 407. For example, in step 407, the terminal determines whether the terminal is configured for an earphone setting or a speaker setting. Further, when the terminal is set that current audio data is outputted to an earphone, the CODEC 161 may control the played audio data to be outputted to the earphone in step 409. When the audio data are set to be outputted to a speaker, the CODEC 161 may transfer corresponding audio data to the speaker support circuit 130 in step 411.

When audio data provided from the CODEC 161 are supplied to dual amplifiers AMP1 and AMP2, the speaker support circuit 130 supports such that the audio data are supplied to sub amplifiers AMP11, AMP12, AMP21, and AMP22 in step 413. The sub amplifiers AMP11, AMP12, AMP21, and AMP22 may amplify a signal provided according to a preset volume level and transfer the amplified signal to connected speakers 11, 12, 21, and 23.

The speakers 11, 12, 21, and 23 may support such that an audio signal corresponding to the transferred signal is outputted in step 415.

As described above, a method of operating a terminal including four speakers according to an exemplary embodiment of the present invention supplies audio data to be outputted to speakers 11, 12, 21, 22 to right dual amplifiers AMP1 and AMP2, transfers an amplified signal to speakers 11, 12, 21, and 22 corresponding to sub amplifiers AMP11, AMP12, AMP21, and AMP22 included in dual amplifiers AMP1 and AMP2 in a one-to-one correspondence to support a stable output.

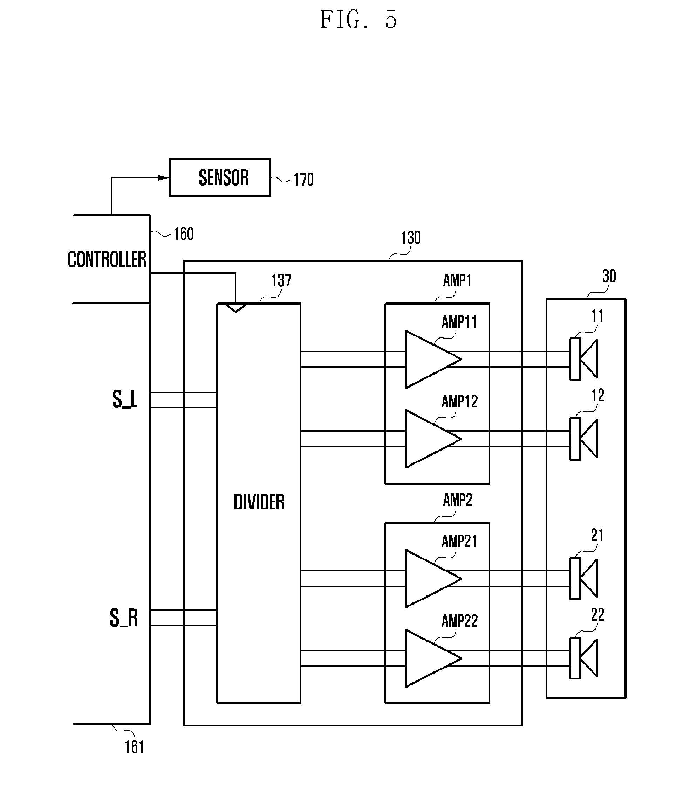

FIG. 5 is a diagram illustrating a configuration of a switch support circuit 130 of the present invention according to an exemplary embodiment of the present invention.

Referring to FIG. 5, a speaker support circuit 130 according to another exemplary embodiment of the present invention may include a divider 137, a first dual amplifier AMP1, and a second dual amplifier AMP2. The speaker support circuit 130 according to another exemplary embodiment of the present invention having a construction as described above may control such that an output signal from the CODEC 161, namely, a differential signal to be outputted to a left side and a differential signal to be outputted to a right side is transmitted to a sub amplifier of a specific dual amplifier through the divider 137. Signal division control of the divider 137 may be performed by the controller 160. The controller 160 controls the divider 137 to supply specific audio data to a specific speaker according to a current state of the terminal 100.

To do this, the controller 160 according to an exemplary embodiment of the present invention may further include a procedure of testing a state of the terminal 100. To do this, the terminal 100 may further include a sensor 170. The sensor 170 may determine whether the terminal 100 is configured in one of a landscape mode or a transverse mode according to a current state or a motion state of the terminal 100, and transfer corresponding information to the controller 160. The sensor 170 may include a gyro sensor, an acceleration sensor, and the like.

Meanwhile, the controller 160 may receive state information of the terminal 100 from the sensor 170 and confirm locations of speakers 11, 12, 21, and 22. For example, the controller 160 may determine a positioning of current four speakers 11, 12, 21, and 22. Referring to FIG. 1, when the terminal is arranged in a landscape mode as described above, the speaker 11 and the speaker 12 may be arranged in a left region based on a center of the screen, and the speaker 21 and the speaker 22 may be arranged in a right region based on the center of the screen.

Then, the controller 160 may receive sensor information regarding a corresponding state of the terminal 100 from the sensor 170, determine that the terminal 100 is in a landscape mode, determine that the left speaker group includes the speaker 11 and the speaker 12, and determine that the right speaker group includes the speaker 21 and the speaker 22. Simultaneously, the controller 160 controls the divider 137 to transfer a signal outputted from an S_L port of the CODEC 161 to the left speaker group comprising speakers 11 and 12, and transfer a signal outputted from an S_R port of the CODEC 161 to the right speaker group comprising speakers 21 and 22.

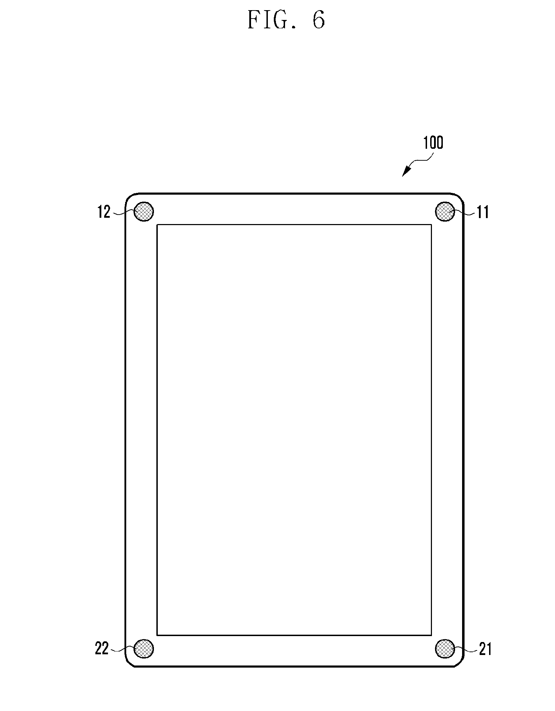

Meanwhile, as shown in FIG. 6, when the terminal 100 is operated in a transverse mode, the controller 160 may update definitions of the left speaker group and the right speaker group. For example, the controller 160 may control such that the left speaker group is determined to include the speaker 12 and the speaker 22. The controller 160 may control such that the right speaker group is determined to include the speaker 11 and the speaker 21. The controller 160 controls the divider 137 to transfer a signal outputted from the S_L port of the CODEC 161 to the left speaker group including the speaker 12 and the speaker 22. The controller 160 controls the divider 137 to transfer a signal outputted from the S_R port of the CODEC 161 to the right speaker group including the speaker 11 and the speaker 21.

Accordingly, the signal outputted from the S_R port of the CODEC 161 is transferred to the speaker 11 of the first dual amplifier AMP1. The signal outputted from the S_R port of the CODEC 161 may be further transferred to the sub amplifier AMP21 of the second dual amplifier AMP2. The amplifier AMP11 and the sub amplifier AMP21 may amplify received signals and supply amplified signals to corresponding speakers, namely, the speaker 11 and the speaker 21.

Meanwhile, the signal outputted from the S_L port of the CODEC 161 may be transferred to the sub amplifier AMP12 of the first dual amplifier AMP1. The signal outputted from the S_L port of the CODEC 161 may be further transferred to the amplifier AMP22 of the second dual amplifier AMP2. Accordingly, the amplified left speaker group signal may be transferred to the speaker 12 and the speaker 22.

As described above, a plurality of speakers, namely, the four speakers illustrated by way of example, are connected to sub amplifiers in one-to-one correspondence. One of an audio signal to be supplied to a left speaker group or an audio signal to be supplied to a right speaker group may be outputted according to a rotating state of the terminal. An audio signal to be supplied to the left speaker group and an audio signal to be supplied to the right speaker group are changed and outputted to one or more speakers (e.g., two speakers according to an exemplary embodiment of the present invention) according to a rotating state of the terminal. An audio signal of the same direction is outputted to one or more speakers (e.g., two speakers) regardless of the rotating state of the terminal. For example, an audio signal to be supplied to a left speaker group or the right speaker group is continuously outputted to two speakers of four speakers although the rotating state of the terminal is changed.

The left speaker group and the right speaker group according to exemplary embodiments of the present invention serve to support a stereo function. Although a signal to be transferred to the right speaker group is substantially transferred to the left speaker group, a signal to be transferred to the left speaker group is transferred to the right speaker group, the same stereo function may be supported. As a result, although the terminal is arranged in different directions in the landscape mode and the transverse mode, the stereo function may be supported through grouping and signal amplification of the left speaker group and the right speaker group. Accordingly, although the current state of the terminal 100 is in a landscape mode in which left and right sides are different, if stereo audio data divided in the left and right sides are outputted, the stereo function may be attained. Accordingly, although the terminal 100 is located in different directions in the landscape mode or the transverse mode, it may support the stereo function through left and right speaker grouping.

As described above, in the terminal 100 according to the exemplary embodiment of the present invention, the user may listen to stereo audio data of a suitable output regardless of a state of the terminal 100 by separately operating the left speaker group (e.g., comprising speakers 11 and 12) and the right speaker group (e.g., comprising speakers 21 and 22) according to a state of the terminal 100 in a procedure of supporting four speakers 11, 12, 21, and 22.

The foregoing terminal 100 may further include various additional modules according to provision forms. For example, when the terminal 100 is a communication terminal, it may include constructions that are not mentioned such as a near distance communication module for near distance communication, an interface exchanging data in a wired communication scheme or a wireless communication scheme of the mobile terminal 100, an Internet communication module communicating with an Internet to perform an Internet function, and a digital broadcasting module receiving and broadcasting digital broadcasting. Because the structural elements can be variously changed according to convergence trend of a digital device, no specific elements can be listed. However, the terminal 100 may include structural elements equivalent to the foregoing structural elements. Further, the terminal 100 according to exemplary embodiments of the present invention may be substituted by specific constructions in the foregoing arrangements according to the provided form or another structure. This can be easily understood by those skilled in the present art.

Further, the terminal 100 according to an exemplary embodiment of the present invention may include an information communication device and a multimedia device such as a Portable Multimedia Player (PMP), a digital broadcasting player, a Personal Digital Assistant (PDA), a music player (e.g., MP3 player), a portable game terminal, a Smart Phone, a notebook computer, and a handheld Personal Computer (PC), a tablet PC, a Global Positioning System (GPS) navigation, an optical disc player, a handheld e-book, a digital camera as well as various mobile communication terminals corresponding to various communication systems.

As mentioned above, in the terminal having a plurality of speakers and a method of operating the same, exemplary embodiments of the present invention may support audio data processing suited to user needs by suitably maintaining a plurality of speaker outputs.

Exemplary embodiments of the present invention can adaptively support operations of a plurality of speakers maintaining a suitable output according to a used state of the terminal by the user.

While the invention has been shown and described with reference to certain exemplary embodiments thereof, it will be understood by those skilled in the art that various changes in form and details may be made therein without departing from the spirit and scope of the invention as defined by the appended claims and their equivalents.

## Claims

1. A terminal having a plurality of speakers, the terminal comprising:
a speaker module including the plurality of speakers;
a speaker support circuit including at least one dual amplifier having two sub amplifiers corresponding to a dual amplifier and amplifying an audio signal to be transferred to corresponding speakers of the plurality of speakers, signal lines connecting the speaker module to a CODEC, and at least one of a dividing circuit and a divider dividing an audio signal from the CODEC to the sub amplifiers of the dual amplifier; and
the CODEC for separately providing audio data to be supplied to the at least one dual amplifier for a left speaker group and a right speaker group to the speaker support circuit as a differential signal, respectively.

2. The terminal of claim 1, wherein the dividing circuit comprises:
a first dividing circuit provided between the at least one dual amplifier and the CODEC, and separately providing an audio signal to be supplied to a left speaker group to sub amplifiers corresponding to a specific dual amplifier; and
a second dividing circuit provided between the at least one dual amplifier and the CODEC, and separately providing an audio signal to be supplied to a right speaker group to sub amplifiers corresponding to another dual amplifier

3. The terminal of claim 1, wherein the plurality of speakers are disposed in a predetermined region adjacent to respective corners of the terminal.

4. The terminal of claim 3, further comprising a sensor for collecting a sensor signal to operatively determine a rotating state of the terminal.

5. The terminal of claim 4, wherein the plurality of speakers are connected to the sub amplifiers in one-to-one correspondence, and one of an audio signal to be supplied to a left speaker group and an audio signal to be supplied to a right speaker group may be outputted according to a rotating state of the terminal.

6. The terminal of claim 5, wherein one of an audio signal to be supplied to a left speaker group and an audio signal to be supplied to a right speaker group is changed and outputted to the predetermined number of speakers of the plurality of speakers according to the rotating state of the terminal, and
wherein an audio signal to be supplied to a left speaker group or the right speaker group is continuously outputted to a remaining number of speakers of the plurality of speakers although the rotating state of the terminal is changed.

7. A method of operating a terminal having a plurality of speakers, the method comprising:
generating a request for an audio data playback;
processing a signal according to the audio data playback;
determining an audio pass which will output the processed signal corresponding to the audio data;
when the audio pass which will output the processed signal corresponding to the audio data is determined, dividing an audio signal to be transferred to sub amplifiers in a front terminal of at least one dual amplifier connected to a plurality of speakers in one-to-on correspondence and including two sub amplifiers corresponding to a dual amplifier;
transferring the divided audio signal to a corresponding sub amplifier of the dual amplifier; and
amplifying the processed signal corresponding to the audio data and transferring the amplified processed signal corresponding to the audio data to the speakers by the dual amplifiers.

8. The method of claim 7, wherein the dividing of the audio signal comprises:
dividing and transferring the audio data received from a CODEC to be transferred to a left speaker group to sub amplifiers included in one of the at least one dual amplifier; and
dividing and transferring the audio data received from the CODEC to be transferred to a right speaker group to sub amplifiers included in a remaining one of the at least one dual amplifier.

9. The method of claim 8, further comprising determining a rotating state of the terminal to determine whether the terminal is operated in a landscape mode or a transverse mode.

10. The method of claim 9, wherein the transferring of the divided audio signal comprises:
when the terminal is arranged in the landscape mode, transferring an audio signal to be transferred to the left speaker group to speakers of the speakers which are biased in a left side of the terminal in the landscape mode relative to a center of a terminal screen; and
transferring an audio signal to be transferred to the left speaker group to speakers of the speakers which are biased in a right side of the terminal in the landscape mode relative to the center of the terminal screen.

11. The method of claim 9, wherein the transferring of the divided audio signal comprises:
when the terminal is arranged in the transverse mode, transferring an audio signal to be transferred to the left speaker group to speakers of the speakers which are biased in a left side of the terminal in the transverse mode relative to a center of a terminal screen; and
transferring an audio signal to be transferred to the left speaker group to speakers of the speakers which are biased in a right side of the terminal in the transverse mode relative the center of the terminal screen.

12. The method of claim 9, wherein the transferring of the divided audio signal comprises transferring audio data of an identical direction to two speakers of the speakers regardless of a mode change when the terminal is changed to the landscape mode or the transverse mode, and transferring audio data to be transferred to the left or right speaker group to a remaining two speakers according the mode change.

13. A terminal for outputting an audio signal, the terminal comprising:
a plurality of speakers;
at least one dual amplifier each of which comprises two sub amplifiers;
a controller configured to determine which of the at least one dual amplifier corresponds to a left speaker group and which of a remaining of the at least one dual amplifier corresponds to a right speaker group based on an orientation of the terminal during operation, to operatively divide the audio signal according to which of the left speaker group and the right speaker group is to output the audio signal, and to operatively transfer corresponding divided portions of the audio signal to the left speaker group and the right speaker group based o the orientation of the terminal during operation.
